(19) Europäisches Patentamt / European Patent Office / Office européen des brevets

(11) **EP 2 251 993 B1**

(12) **EUROPEAN PATENT SPECIFICATION**

(45) Date of publication and mention
of the grant of the patent:
**10.07.2013 Bulletin 2013/28**

(51) Int Cl.:
*H04B 10/66* (2013.01)   *H04B 10/67* (2013.01)

(21) Application number: **09290345.9**

(22) Date of filing: **11.05.2009**

(54) **Adjustment scheme for a polarization demultiplexer in an optical dual-polarization BPSK receiver**

Justierungsplan für einen Polarisationsdemultiplexer in einem optischen Doppelpolarisations-BPSK-Empfänger

Schéma de réglage pour un démultiplexeur de polarisation dans un récepteur BPSK double polarisation optique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**17.11.2010 Bulletin 2010/46**

(73) Proprietor: **Alcatel Lucent**
**75007 Paris (FR)**

(72) Inventors:
• **Weisser, Stefan**
  **90409 Nürnberg (DE)**
• **Leven, Andreas**
  **90562 Heroldsberg (DE)**
• **Kaneda, Noriaki**
  **07090 Westfield, NJ (US)**
• **Costantini, Carlo**
  **23880 Casatenovo (LC) (IT)**
• **Cucchi, Silvio**
  **20083 Gaggiano (MI) (IT)**

(74) Representative: **Wetzel, Emmanuelle**
**Alcatel Lucent**
**Intellectual Property & Standards**
**70430 Stuttgart (DE)**

(56) References cited:
**EP-A- 2 051 414      WO-A-02/35743**
**US-A- 5 793 511**

• **YUNFENG SHEN ET AL: "PMDC for polarization multiplexed RZ-DQPSK systems" OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467437 ISBN: 978-1-4244-2606-5**
• **MARIO MARTINELLI ET AL: "Polarization Stabilization in Optical Communications Systems" JOURNAL OF LIGHTWAVE TECHNOLOGY, IEEE SERVICE CENTER, NEW YORK, NY, US, vol. 24, no. 11, 1 November 2006 (2006-11-01), pages 4172-4183, XP011142887 ISSN: 0733-8724**

**Description**

The invention relates to optical communication, in particular to a method for adjusting a polarization demultiplexer in an optical receiver configured to receive a dual-polarization optical signal having two BPSK modulation signal components in different polarizations.

A dual-polarization (DP) optical signal is composed of two signals components in different polarizations, typically in orthogonal polarizations. A synonymous term for dual-polarization is polarization division multiplexing (PDM). By using a dual-polarization transmission scheme, the data rate can be doubled in comparison to a non-DP transmission scheme. Such a dual-polarization optical signal may have two BPSK (binary phase shift keying) modulated signal components or two QPSK (quaternary or quadrature phase shift keying) modulated signal components.

Coherent optical transmission using DP-BPSK signal modulation is a very promising technique due to its superior tolerance to optical nonlinearities to other modulation formats such as DP-QPSK. At a DP-BPSK receiver, the received optical light is typically split into two waves by an optical polarization beam splitter, with the polarizations of the two waves being orthogonal. The waves are coherently superpositioned with a single-frequency optical local oscillator (LO) signal. The resulting signals are converted into the electrical domain. Typically, the signal recovery is performed in the digital domain by using an analog-to-digital converter (ADC) and subsequent digital signal processing.

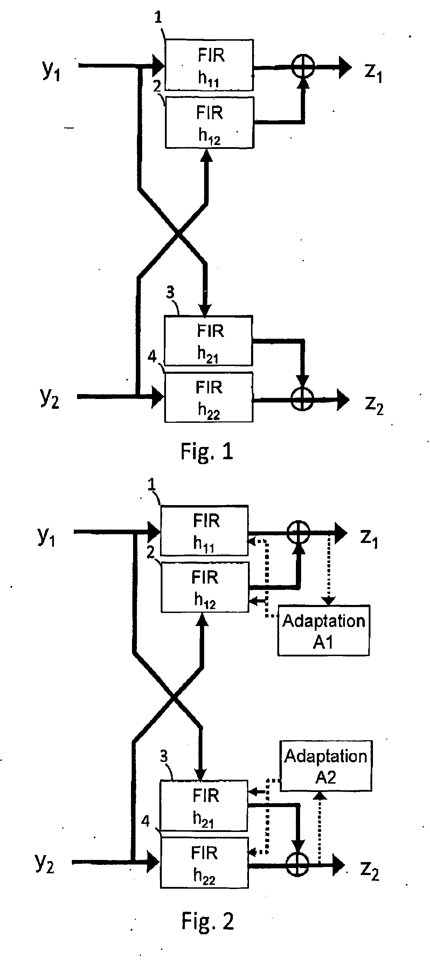

For recovering the two signal components of such an DP optical signal, a polarization demultiplexer is used. Fig. 1 illustrates an embodiment of a polarization demultiplexer realized in the electrical domain. Two received input signal components $y_1$, $y_2$ are fed to the polarization demultiplexer. The input signal components $y_1$, $y_2$ may be derived from two waves generated by an optical polarization beam splitter. Due to the polarization rotation of the optical fiber, the two signal components $y_1$, $y_2$ typically do not correspond to the two signal components of the transmitted DP signal, respectively.

A polarization demultiplexer is used to rotate the received signal components $y_1$, $y_2$ for recovering the initial signal components as polarization multiplexed in the transmitter.

An embodiment of a simple rotation function of a polarization demultiplexer having output signal components $z_1$, $z_2$ (which should correspond to the original polarization components) may be specified as:

$$\begin{pmatrix} z_1(n) \\ z_2(n) \end{pmatrix} = \begin{pmatrix} \cos\theta\, y_1(n) + \sin\theta\, y_2(n) \\ -\sin\theta\, y_1(n) + \cos\theta\, y_2(n) \end{pmatrix} = \begin{pmatrix} \cos\theta & \sin\theta \\ -\sin\theta & \cos\theta \end{pmatrix}\begin{pmatrix} y_1(n) \\ y_2(n) \end{pmatrix} = \begin{pmatrix} h_{11} & h_{12} \\ h_{21} & h_{22} \end{pmatrix}\begin{pmatrix} y_1(n) \\ y_2(n) \end{pmatrix}$$

The elements $h_{ij}$ of the rotation matrix represent filter parameters of the polarization demultiplexer. The filter parameters may be optimized independently from each other.

To improve the accuracy of the filter and to use the filter also for signal equalization, e.g. for the equalization of PMD (polarization mode dispersion), the filter may not only describe a rotation but information from neighboring samples around the main samples may be also taken into account as indicated in the embodiment of Fig. 1. Here, four FIR (finite impulse response) filters 1-4 are organized in a butterfly structure. The received signal components $y_1$, $y_2$ in two polarizations are each distributed to a respective pair of the four FIR filters 1-4. The outputs of both pairs of FIR filters 1-4 are added, yielding the output signal components $z_1$, $z_2$ for the two polarizations.

In case of performing a simple rotation, the 4 FIR filters 1-4 in Fig. 1 can be replaced by 4 multipliers having each a single filter coefficient and organized in the same butterfly structure.

The standard algorithm for adjusting the filter coefficients $h_{ij}$ is the constant modulus algorithm (CMA). The CMA is discussed in more general in the paper "Blind Equalization Using the Constant Modulus Criterion: A Review", C. Richard Johnson et al., Proceedings of the IEEE, Vol. 86, No. 10, October 1998. The application of the CMA for adjusting a polarization demultiplexer is discussed in the paper "Digital filters for coherent optical receivers", Seb J. Savory, Optical Express, Vol. 16, No. 2, Optical Society of Americas, January 2008 and in the paper "New Processing Techniques Based on the Constant Modulus Adaptive Algorithm", J. R. Treichler et al., IEEE Transactions on Acoustics, Speech and Signal Processing, Vol. ASSP-33. No. 2, April 1985.

The CMA makes use of the property of phase shift keying modulation schemes that the amplitude of the received signal does not change from symbol to symbol. The CMA tries to adjust the receiver in such a way that each of the demultiplexed signals $z_1$, $z_2$ lie on a circle with constant amplitude in the complex plane.

In case of a unity circle with amplitude = 1, the following quadratic constant modulus (CM) error or quadratic cost function may be used for adjusting the filter coefficients $h_{ij}$:

$$J'_k(n) = \left(\left|z_k(n)\right|^2 - 1\right)^2 \quad \text{with } k = 1, 2$$

The adaption algorithms adjust the filter coefficients $h_{ij}$ such that the cost functions $J'_1$ and $J'_2$ are minimized.

The CMA is well suited for polarization demultiplexing of a DP-QPSK signal. However, the CMA cannot be used with the DP-BPSK modulation format. This is due to the fact that under certain launch conditions of the transmitted binary signal into the optical fiber the CMA converges to a state of the polarization demultiplexer which yields a quaternary constellation for one or both BPSK channels. Such quaternary constellation is associated with a corrupted BER (bit error rate). As discussed above, the CMA cost function penalizes the deviation of the received signal from a circle with constant amplitude (e.g. the unity circle). Therefore, the CMA would yield no error signal for the polarization demultiplexer in case of a quaternary constellation with constant amplitude at an output of the polarization demultiplexer (although the transmitter sent a binary constellation).

The infeasibility of the CMA in case of the DP-BPSK modulation is discussed more in detail in the European patent application 08290902.9 filed by the Applicant on September 24, 2008 and having the title "A decision directed algorithm for adjusting a polarization demultiplexer in a coherent detection optical receiver".

In an experiment discussed in the paper "Transmission of 81 channels at 40Gbit/s over a Transpacific-Distance Erbium-only Link, using PDM-BPSK Modulation, Coherent Detection, and a new large effective area fibre", G. Charlet et al., Proc. ECOC 2008, paper Th.3.E.3. a certain number of received symbols of a DP-BPSK signal is recorded using a high-speed oscilloscope, which are subsequently processed using an external computer (offline processing).

In said European patent application 08290902.9, a decision-directed algorithm is used for polarization demultiplexing of a DP-BPSK optical signal.

US 5793511 relates to an optical receiver and an optical system containing an equalizing circuit the equalizing circuit being used to correct a delay distortion of two electrical signal components the two electrical signal components being produced by splitting a routable optical signal.

EP 2051414 presents a system and method for polarization demultiplexing, polarization mode dispersion and DXSPK demodulation.

WO 0235743 relates to an apparatus, system and method for compensating polarization mode dispersion.

It is an object of the present invention to provide an adjustment scheme for use with DP-BPSK which - in contrast to CMA - reliably converges to a binary constellation. The new adjustment scheme should preferably be suited for a real-time implementation in systems operating at 40 Gbit/s and above (e.g. 100 Gbit/s) per optical wavelength. Further objects of the invention are to provide a corresponding apparatus for adjusting a polarization demultiplexer and a corresponding optical receiver.

These objects are achieved by the method, the apparatus and the receiver according to the independent claims.

An idea of the invention is add an additional contribution to a CMA cost function that penalizes the deviation of the received constellation from a binary constellation.

A first aspect of the invention relates to a method for adjusting a polarization demultiplexer (e.g. comprising 4 FIR filters as shown in Fig. 1) in an optical receiver configured to receive a DP-BPSK signal having two BPSK modulated signal components in different polarizations. The polarization demultiplexer outputs a first output signal component and a second output signal component. The method adjusts the polarization demultiplexer based on an error function associated to the first output signal component and/or an error function associated to the second output signal component. Such an error function associated to an output signal component comprises a constant modulus error contribution indicating a deviation of the respective output signal component from a circle around the root of the complex plane. In addition to the constant modulus error contribution, the error associated to an output signal component comprises a constellation error contribution indicating a deviation of the constellation of the respective output signal component from a binary constellation. In other words: the constellation error contribution penalizes the deviation of the recovered constellation from a binary constellation.

In comparison to the standard CMA which is blind for a deviation from a binary constellation and thus cannot be used for DP-BPSK modulation, the error or cost function of the new algorithm considers also the deviation of the constellation from a binary constellation. Thus, the new algorithm is suitable for DP-BPSK modulation. The new algorithm can be implemented with low added complexity compared to CMA. The new algorithm is well suited for real-time implementation in an ASIC (application-specific integrated circuit) or FPGA (field-programmable gate array), with low additional implementation complexity compared to standard CMA.

It should be noted that it is not necessary to actually compute values of an error function. The algorithm may not even know the cost function. Preferably, a method based on a gradient descent may be used where filter parameters are updated based on iteration equations, where the iteration equations are dependent on gradients of error functions. In this case, the adaption is still based on an error function.

The polarization demultiplexer may be adjusted based on a combined error function comprising a (partial) error function associated to the first output signal component and a (partial) error function associated to the second output signal component (e.g. the sum of both partial error functions). With respect to the wording of claim 1, it should be noted that in this case the polarization demultiplexer is still adjusted based on an error function associated to the first output signal component and an error function associated to the second output signal component. The combined error function may be minimized, or both partial error functions may be separately minimized. In case of using the sum of both partial error functions as a combined error function and having only partial error function values $\geq 0$, minimizing the combined error function is mathematically equivalent to minimizing each of the partial error functions.

Instead of using two error functions associated to the two output signal components, the polarization demultiplexer may be adjusted based on only a single error function associated to one of the two output signal components.

A filter coefficient or each filter coefficient of the polarization demultiplexer may be adjusted based on the two error functions associated to the two output signal components (e.g. based on the sum of both error functions). Preferably, however, a filter coefficient is adjusted based on one error function. With respect to Fig. 1, the filters 1, 2 may be adjusted based on the error function associated to $z_1$, whereas the filters 3, 4 may be adjusted based on the error function associated to $z_2$.

Preferably, the receiver is a coherent receiver using coherent detection, where the incoming signal is coherently superpositioned with a single-frequency optical local oscillator (LO) signal.

However, there is typically a frequency offset between the carrier frequency of the laser at the transmitter and the LO-frequency. Due to the frequency offset, the respective output signal component of the polarization demultiplexer may rotate around the root of the complex plane (if the offset is not compensated before the polarization demultiplexer). Unless otherwise stated, throughout the application the term "constellation" of the respective output signal means the locations of the signal values where such a rotation is notionally compensated (i.e. the rotation is notionally assumed to be not existent). Nevertheless, this does not mean that such rotation or phase offset is actually compensated for determining the error or updated filter parameters based thereon.

Preferably, the constellation error contribution indicates (or depends on) the deviation of the constellation of the respective output signal component from a line through the origin of the complex plane. The constellation error contribution becomes minimal if the constellation at the respective output of the polarization demultiplexer lies on a straight line through the origin of the complex plane. Such a constellation diagram having two cluster points with a phase offset of n on a line is characteristic for a binary constellation.

In other words: the constellation error contribution preferably indicates (or depends on) the deviation of the phase difference between the two constellation cluster points from the ideal phase difference of $\pi$.

According to a preferred embodiment, the constellation error contribution indicates a deviation of a phase difference between

- the phase of a sample of a first bit of the respective output signal component and
- the phase of a sample of a second bit of the respective output signal component, with the logical value (e.g. +1) of the transmitted second bit different to the logical value (e.g. -1) of the transmitted first bit,

from $\pi$.

Here, optionally a phase offset between the samples due to a frequency offset of a local oscillator in the coherent receiver is considered. Thus, the phase offset of the later bit due to the LO frequency offset may be reversed.

In other words: the constellation error contribution preferably indicates to which extend the phase difference mod $\pi$ approaches 0.

Preferably, the first and the second bits are neighboring bits. Using neighboring bits reduces the resulting phase offset between the bit samples due to the LO frequency offset.

For indicating this deviation from $\pi$, the constellation error contribution may be based on the imaginary part of a product of

- a sample of a first bit of the respective output signal component
- the conjugate complex of a sample of a second bit of the respective signal; and
- optionally an offset term considering a phase offset between the samples due to a frequency offset of a local oscillator in the coherent receiver.

In particular, the constellation error function of an optical channel $k$ at a time instance $n$ may be proportional to

$$\left[\mathrm{imag}\left(z_{\mathrm{k}}(n)z_{\mathrm{k}}^{*}(n-o\cdot i)e^{-j\varphi}\right)\right]^{2} \text{ with } \varphi \approx 2\pi\cdot i\cdot\Delta f_{\mathrm{LO}}/f_{\mathrm{SYMBOL}}$$

where $z_{\mathrm{k}}(n)$ denotes a sample at a time n, o denotes the oversampling factor, with $o \geq 1$, i denotes the time offset in bits, $f_{\mathrm{SYMBOL}}$ denotes the symbol rate, and $\Delta f_{\mathrm{LO}}$ denotes an estimated frequency offset between a laser at a transmitter and a local oscillator at the coherent receiver. One may dispense with the offset term $e^{-j\varphi}$, in particular in case the frequency offset is small. Instead of a squared constellation error function, the adjustment of the polarization demultiplexer may be based on a constellation error function with the squaring operation replaced by taking the complex magnitude (complex modulus), i.e. by determining the magnitude of a complex number.

Preferably, samples $z_{\mathrm{k}}(n)$ and $z_{\mathrm{k}}(n-o)$ of neighboring bits are used. In case of using also 2-times oversampling, the above equation simplifies to:

$$\left[\mathrm{imag}\left(z_{\mathrm{k}}(n)z_{\mathrm{k}}^{*}(n-2)e^{-j\varphi}\right)\right]^{2} \text{ with } \varphi = 2\pi\Delta f_{\mathrm{LO}}/f_{\mathrm{SYMBOL}}$$

The polarization demultiplexer is preferably an electrical polarization demultiplexer. Advantageously, the polarization demultiplexer comprises four FIR filters organized in a butterfly structure as discussed in connection with Fig. 1. Such an polarization demultiplexer allows PMD compensation. Instead, the polarization demultiplexer may be also realized by four multipliers organized in a butterfly structure which allows rotation of the polarization components. However, the latter structure does not allow PMD compensation.

The filter parameters may be determined based on an iterative minimum seeking method such as gradient descent (in particular, stochastic gradient descent). E.g. the filter parameters of the polarization demultiplexer which are involved in forming a respective output signal component are updated based on a gradient descent of the error function associated to the respective output signal component.

Preferably, the filter parameters of a FIR filter are updated every Q samples, Here, Q is preferably much larger than 1, e.g. 64, 128 or 256. This reduces the computational effort in comparison to an update method where a FIR filter is updated every bit or even every sample.

Q is preferably an integer multiple of the oversampling factor.

Preferably, the filter parameters of a FIR filter are updated every Q samples of the signal at the output of the FIR filter, with Q >> 1 and Q = k ·o, where $o \geq 1$ denotes the oversampling factor and k being an integer, e.g. in case of o = 2 the filter parameters may be updated every Q = 128 samples.

Further preferred embodiments are given in the dependent claims.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e. the claims can be basically combined in any order.

Another aspect of the invention relates to an apparatus for adjusting a polarization demultiplexer in a DP-BPSK optical receiver. The features of the apparatus correspond to the features of the method discussed above: The apparatus comprises means for adjusting the polarization demultiplexer, the means configured to adjust the polarization demultiplexer based on an error function associated to the first output signal component and/or an error function associated to the second output signal component. The error function associated to an output signal component comprises a constant modulus error contribution indicating a deviation of the respective output signal component from a circle around the root of the complex plane. The error function further comprises a constellation error contribution indicating a deviation of the constellation of the respective output signal component from a binary constellation.

Still another aspect of the invention relates to a receiver for a DP-BPSK signal, with the receiver comprising a polarization demultiplexer and the apparatus for adjusting the polarization demultiplexer as discussed above.

The above remarks related to the first aspect of the invention are basically also applicable to the other two aspects of the invention.

The invention is explained below in an exemplary manner with reference to the accompanying drawings, wherein

Fig. 1    illustrates an embodiment of a polarization demultiplexer having 4 FIR filters;

Fig. 2    illustrates an embodiment of the inventive adjustment scheme for ad- justing the polarization demultiplexer as shown in Fig. 1;

Fig. 3    illustrates an exemplary constellation of a signal output component at an output of a polarization demultiplexer;

Fig. 4    illustrates recovered constellations of the BPSK output signal compo- nents at the polarization demultiplexer output and the respective curves of the constant modulus and the constellation errors in case of using conventional CMA and worst-case launch conditions; and

Fig. 5    illustrates recovered constellations of the BPSK output signal compo- nents at the polarization demultiplexer output and the respective curves of the constant modulus and the constellation errors in case of using an embodiment of the inventive method and worst-case launch conditions;

Fig. 1 was already discussed above.

Fig. 2 illustrates an embodiment of the inventive adjustment scheme for adjusting the polarization demultiplexer as shown in Fig. 1. Here, the samples of the first input signal component $y_1$ are fed to FIR filters 1, 3 and the samples of the second signal component $y_2$ are fed to FIR filters 2, 4. The outputs of FIR filters 1, 2 and the outputs of FIR filters 3, 4 are added, yielding samples of the first output signal component $z_1$ and samples of the second output signal component $z_2$. The coefficients of FIR filter 1-4 are determined using adaptation algorithms A1 and A2, where adaption algorithm A1 is associated to the first polarization and adaption algorithm A2 is associated to the second polarization. The adaptation algorithms A1 and A2 adjust the filter coefficients such that cost function $J_1$ associated to the output signal component $z_1$ and cost function $J_2$ associated to the output signal component $z_2$ are essentially minimized.

The cost or error functions $J_1$ and $J_2$ of the adaption algorithms may correspond to:

$$(1) \qquad J_k(n) = A_k(n) + B_k(n) = \left(\left|z_k(n)\right|^2 - r^2\right)^2 + B_k(n),$$

with the constellation error $B_k(n)$ given by:

$$(2) \qquad B_k(n) = \left[\mathrm{imag}\left(z_k(n)z_k^*(n - o \cdot i)e^{-j\varphi}\right)\right]^2 \text{ with } \varphi = 2\pi \cdot i \cdot \Delta f_{\mathrm{LO}} / f_{\mathrm{SYMBOL}}$$

Here, k = 1, 2 denotes the respective polarization (or in other words: channel), $z_k(n)$ denotes a sample of the respective output signal component at a time n, $r^2$ denotes the square of the expected amplitude (e.g. $r^2$=1), o denotes the oversampling factor of the respective output signal component (with $o \geq 1$), i denotes a time offset in bits, $f_{\mathrm{SYMBOL}}$ denotes the symbol rate, and $\Delta f_{\mathrm{LO}}$ denotes an estimated frequency offset between a laser at a transmitter and a local oscillator at the coherent receiver.

The frequency offset $\Delta f_{\mathrm{LO}}$ may be determined by a digital signal processing algorithm such as the Viterbi/Viterbi frequency/phase estimation algorithm. This algorithm is described in the paper "Nonlinear Estimation of PSK-Modulated Carrier Phase with Application to Burst Digital Transmission", And-rew J. Viterbi et al., IEEE Transactions on Information Theory, Vol. IT-29, No. 4, July 1983.

In case the oversampling factor o is 2 (i.e. two samples per bit) and the time offset i is 1 bit, Eq. 2 results in:

$$(3) \qquad B_k(n) = \left[\mathrm{imag}\left(z_k(n)z_k^*(n - 2)e^{-j\varphi}\right)\right]^2 \text{ with } \varphi = 2\pi\Delta f_{\mathrm{LO}} / f_{\mathrm{SYMBOL}}$$

with $\varphi = 2\pi\Delta f_{\mathrm{LO}}/f_{\mathrm{SYMBOL}}$

The first contribution in (1) is a constant modulus (CM) error (here: a squared error function is used). Such CM error contribution is well-known. According to the invention, an additional contribution is added to the CM error function, with the additional contribution penalizing the deviation of the constellation at an output of the polarization demultiplexer from a binary constellation. An embodiment of the proposed additional contribution to the cost function is the constellation error $B_k(n)$ as given in (2) and (3). The error function $J_k(n)$ in (1) comprises two contributions:

1. a CM error contribution $A_k(n)$ penalizing a deviation of the respective output signal component from the circle with an radius r (e.g. r = 1) around the root of the complex plane, and
2. a constellation error contribution $B_k(n)$ penalizing a deviation of the constellation of the respective output signal component from a binary constellation.

Optionally, one or both contributions in (1) may be weighted by a factor, thereby weighting the impact of the respective contribution in the error function. Instead of using squared error contributions, the squares in (1) to (3) for squaring the parenthesized terms may be replaced by operations to determine the absolute value.

The error terms in (1) may be determined once per Q samples, e.g. Q = 128. Q is preferably an integer multiple of the oversampling factor o. Error terms may be determined for n = 0, Q, 2Q, 3Q, 4Q etc., e.g. n = 0, 2, 4, 6, 8 (Q = 2) or n = 0, 128, 256, 386, 512 (Q =128). Accordingly, the FIR filters may be updated once per Q samples.

However, for minimizing the error function it is not necessary to actually compute values of the error function $J_k(n)$. Instead, an iterative minimum search may be used, e.g. a minimum search based on a gradient descent method (in particular, a stochastic gradient decent method) may be used. Gradient descent is based on the observation that the error function decreases fastest if one goes from a point in the parameter space in the direction of the negative gradient of the error function.

When determining the gradient functions of $A_k(n)$ und $B_k(n)$ in (1) and (2), the following update algorithms for the filter parameters $h_{ij}$ of FIR filters 1-4 can be derived:

$$(3) \quad \begin{aligned} h_{11}(m) &\to h_{11}(m) - \left[\mu_1\left(|z_1(n)|^2 - 1\right)z_1(n) + j\mu_2 C_1(n)\right]y_1^*(n-m) \\ h_{12}(m) &\to h_{12}(m) - \left[\mu_1\left(|z_1(n)|^2 - 1\right)z_1(n) + j\mu_2 C_1(n)\right]y_2^*(n-m) \\ h_{21}(m) &\to h_{21}(m) - \left[\mu_1\left(|z_2(n)|^2 - 1\right)z_2(n) + j\mu_2 C_2(n)\right]y_1^*(n-m) \\ h_{22}(m) &\to h_{22}(m) - \left[\mu_1\left(|z_2(n)|^2 - 1\right)z_2(n) + j\mu_2 C_2(n)\right]y_2^*(n-m) \end{aligned}$$

with

$$(4) \quad C_k = z_k(n-o\cdot i)e^{j\varphi}\,\mathrm{imag}\left[z_k(n)z_k^*(n-o\cdot i)e^{-j\varphi}\right] - z_k(n+o\cdot i)e^{-j\varphi}\,\mathrm{imag}\left[z_k(n+o\cdot i)z_k^*(n)e^{-j\varphi}\right]$$

Here, m = 0,1,...(N-1) is the index of the filter tap (N = number of filter taps, e.g. N = 12), and $\mu_1$ and $\mu_2$ are adaptation parameters. The adaption parameter $\mu_1$ is associated with the CM error contribution $A_k(n)$ and the adaption parameter $\mu_2$ is associated with the constellation error contribution $B_k(n)$.

Instead of using (4) for $C_k$, a simplified equation may be used which omits the exponential pre-factors $e^{j\varphi}$ and $e^{j\varphi}$ (in front of the imag() terms) and is a good approximation of (4) for small absolute values of $\varphi$ :

$$(4') \quad C_k = z_k(n-o\cdot i)\,\mathrm{imag}\left[z_k(n)z_k^*(n-o\cdot i)e^{-j\varphi}\right] - z_k(n+o\cdot i)\,\mathrm{imag}\left[z_k(n+o\cdot i)z_k^*(n)e^{-j\varphi}\right]$$

The standard CMA can be obtained from (3) by setting $\mu_2$ to 0.

In case the oversampling factor o is 2 and the time offset i is 1, bit, (4) results in:

$$(5) \quad C_k = z_k(n-2)e^{j\varphi}\,\mathrm{imag}\left[z_k(n)z_k^*(n-2)e^{-j\varphi}\right] - z_k(n+2)e^{-j\varphi}\,\mathrm{imag}\left[z_k(n+2)z_k^*(n)e^{-j\varphi}\right]$$

As discussed in connection with (4'), also in (5) the pre-factors $e^{j\varphi}$ and $e^{-j\varphi}$ (in front of the imag() terms) may be omitted. The filter parameters of a FIR filter may be updated every Q samples. In (3) to (5), the time parameter n may be n = 0, Q, 2Q, 3Q, etc. Q is preferably an integer multiple of the oversampling factor o, i.e. Q = k·o, where $0 \geq 1$ denotes the oversampling factor and k is an integer. E.g. in case of an oversampling factor of o = 2, Q may be set to 2 or may be set to 128. The filter parameters may be updated at time instances 0, Q, 2Q, 3Q, 4Q etc., e.g. 0, 2, 4, 6, 8 (Q = 2) or 0, 128, 256, 386, 512 (Q = 128).

The accuracy of the filter update algorithm may be improved by additional averaging. In this case the filter coefficients are preferably updated every Q samples. When using additional averaging the update algorithms in (3) may be rewritten as:

$$h_{11}(m) \rightarrow h_{11}(m) - \left[\mu_1 \left\langle \left(|z_1(n)|^2 - 1\right)z_1(n)y_1^*(n-m)\right\rangle + j\mu_2 \left\langle C_1(n)y_1^*(n-m)\right\rangle\right]$$

$$(6) \quad h_{12}(m) \rightarrow h_{12}(m) - \left[\mu_1 \left\langle \left(|z_1(n)|^2 - 1\right)z_1(n)y_2^*(n-m)\right\rangle + j\mu_2 \left\langle C_1(n)y_2^*(n-m)\right\rangle\right]$$

$$h_{21}(m) \rightarrow h_{21}(m) - \left[\mu_1 \left\langle \left(|z_2(n)|^2 - 1\right)z_2(n)y_1^*(n-m)\right\rangle + j\mu_2 \left\langle C_2(n)y_1^*(n-m)\right\rangle\right]$$

$$h_{22}(m) \rightarrow h_{22}(m) - \left[\mu_1 \left\langle \left(|z_2(n)|^2 - 1\right)z_2(n)y_2^*(n-m)\right\rangle + j\mu_2 \left\langle C_2(n)y_2^*(n-m)\right\rangle\right]$$

Here, each term (...) denotes a mean value over P ≥ 1 values of the respective parenthesized term with different time instances n. In other words: each term ⟨...⟩ denotes a mean value over P ≥ 1 samples. The different time instances n used for determining the respective mean value may be selected from a time window of Q time instances (e.g. the time window of the last Q time instances). The time instances n may comprise the latest time instance from the window and P-1 additional time instances selected from the window of Q time instances. The mean value of each parenthesized function in (6) may be defined as:

$$(7)$$

$$\langle f(n) \rangle := \frac{1}{P} \sum_p f(n-p) \quad \text{with } p \in \{0, o, 2o, 3o, \cdots Q\}$$

The average is taken over P samples from the set in (7). The definition (7) can be simplified In case of o = 2 (i.e. 2 samples per symbol) and P samples of P consecutive bits to:

$$(8) \qquad \langle f(n) \rangle := \frac{1}{P} \sum_{p'=0}^{P-1} f(n-2p')$$

E.g. P may be set to 8. In this case Q may be set to 128. It is evident that the algorithms in (3) are a special case of the above algorithms in (6) with P = 1.

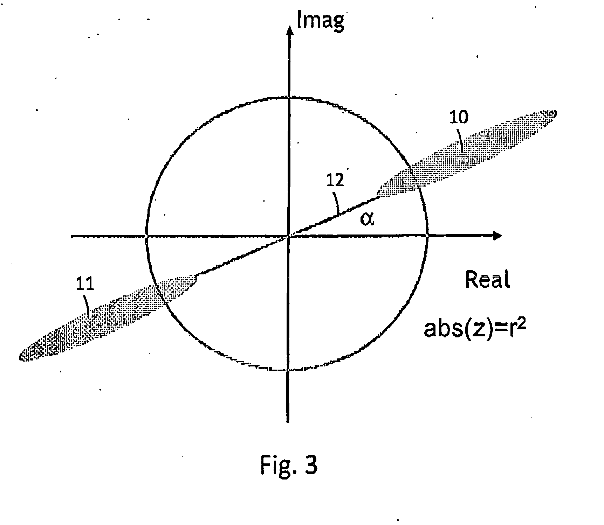

Fig. 3 explains the constellation error contribution $B_k(n)$ more in detail.

In (2), the offset term $e^{-j\varphi}$ is used to compensate an additional phase offset between the two samples $z_k(n)$ and $z_k(n - o \cdot i)$ due to a frequency offset of the local oscillator. Due to the offset term in (2) this phase offset is reverted. In the following explanation, it is assumed that this additional phase offset is already subtracted from the phase of the later sample $z_k(n)$.

Fig. 3 shows a constellation of the signal output component $z_k$ at an output of the polarization demultiplexer having two clusters 10, 11 of samples. Each cluster 10, 11 is associated with a respective symbol value of the BPSK signal. In case of a binary constellation, the output constellation essentially lies on a line 12 through the origin of the complex plane as shown in Fig. 3. The angle α between the line 12 and the real axis may be arbitrary and may vary slowly in a real system.

The conventional CMA does not consider whether the output constellation lies on a line through the origin. In contrast, the inventive constellation error contribution $B_K(n)$ penalizes a deviation of the constellation from such a line; the constellation error contribution $B_k(n)$ becomes minimal if the constellation at the respective output lies on a line through the origin. In this case the phase difference between the constellation points is essentially π.

The constellation error contribution $B_k(n)$ penalizes a deviation of the phase difference between two samples s $z_k(n)$ and $z_k(n-o \cdot i)$ from n if the samples belong two different clusters 10, 11 in Fig. 3.

The two samples $z_k(n)$ and $z_k(n-o \cdot i)$ which are correlated in (2) can be written as:

$$(6) \qquad z(n) = A(n)e^{j\alpha}e^{j\frac{\pi}{2}d(n)}$$

$$(7) \qquad z(n-o\cdot i) = A(n-o\cdot i)e^{j\alpha}e^{j\frac{\pi}{2}d(n-o\cdot i)}$$

with real-valued amplitudes A(n).

In case of a wanted binary constellation at the output, $d(n) = 0$ or 2, i.e. the phase is either $\alpha$ or $\alpha+\pi$. In case of an unwanted quaternary constellation at the output, $d(n) = 0, 1, 2, 3$, i.e. the phase is either $\alpha$, $\alpha + \pi/2$, $\alpha + n$, or $\alpha + 3/2\cdot\pi$.

Based on (6) and (7), the constellation error contribution $B_K(n)$ can be written as:

$$(8) \qquad B_k(n) = \left[ \operatorname{imag}\left( A(n)A(n-o\cdot i)e^{j\frac{\pi}{2}(d(n)-d(n-o\cdot i))} \right) \right]^2$$

As apparent from (8), the constellation error contribution $B_K(n)$ is independent of the angle $\alpha$.

In case of a wanted binary constellation at the output of the polarization demultiplexer and the values of $d(n)$ and $d(n-o\cdot i)$ are different, i.e. two samples of different clusters 10 and 11 are correlated in $B_K(n)$ (e.g. $d(n) = 2$ and $d(n-o\cdot i) = 0$), it follows that $B_K(n) = 0$. This is also valid in case $d(n)$ and $d(n-o\cdot i)$ have the same values.

In case of a quaternary constellation and $|d(n)-d(n-o\cdot i)| = 1$ or 3, it follows that $B_K(n) > 0$. In case of a quaternary constellation, $B_K(n)$ vanishes if $|d(n)-d(n-o\cdot i)| = 0$ or 2. Nevertheless, on average, $B_K(n) > 0$ for a quaternary constellation at the output, whereas $B_K(n) = 0$ for a binary constellation at the output.

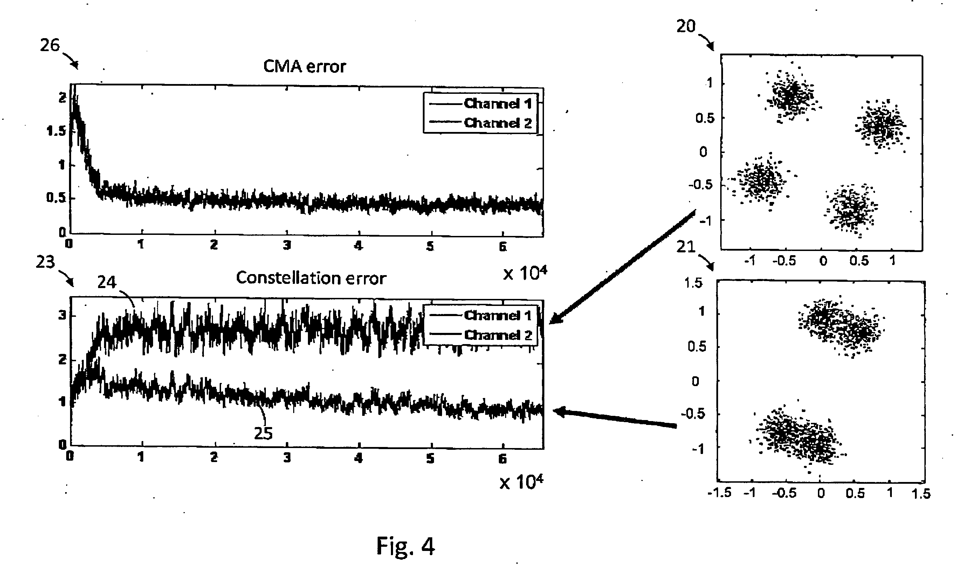

The effectiveness of the inventive concept is proven by simulation of a DP-BPSK system with worst-case launching conditions of the optical signal into the fiber. The right upper scatter plot 20 and the right lower scatter plot 21 in Fig. 4 show the recovered constellations (after convergence) of the signals $z_1$ and $z_2$ at the polarization demultiplexer output, respectively. Here, conventional CMA is used. In both plots 20, 21, the horizontal axis corresponds to the real part axis (in-phase), and the vertical axis corresponds to the imaginary part axis (quadrature phase).

Due to the BPSK modulation a binary constellation is sent per channel. Nevertheless, the recovered constellations at the filter outputs are not binary (in particular the upper constellation). Here, the upper constellation of $z_1$ in diagram 20 is quaternary, while the lower constellation of $z_2$ in diagram 21 is closer to a binary constellation. In the lower left diagram 23, the magnitude 24 of the constellation error of output signal component $z_1$ and the magnitude 25 of the constellation error of output signal component $z_2$ are shown over time. Since the magnitude of the constellation error is dependent on the deviation of the respective output signal component $z_1$, $z_2$ from a binary constellation, the magnitude 24 of the constellation error of the output signal component $z_1$ (having a quaternary constellation) is higher than the magnitude 25 of the constellation error of the output signal component $z_2$ (having a constellation closer to binary). Thus, at least the channel related to the signal $z_1$ cannot be recovered. Also the channel related to the signal $z_2$ is expected to have a high BER.

As shown in the upper left diagram 26, the CM error is nearly identical for both signals $z_1$ and $z_2$, although the deviations of the constellations in diagrams 20, 21 from a binary constellation are different. Moreover, after convergence the CM error is relatively small (since the constellations are already located on the unity circle). Thus, CMA is not sufficient for the adjustment of the polarization demultiplexer in case of a DP-BPSK optical signal.

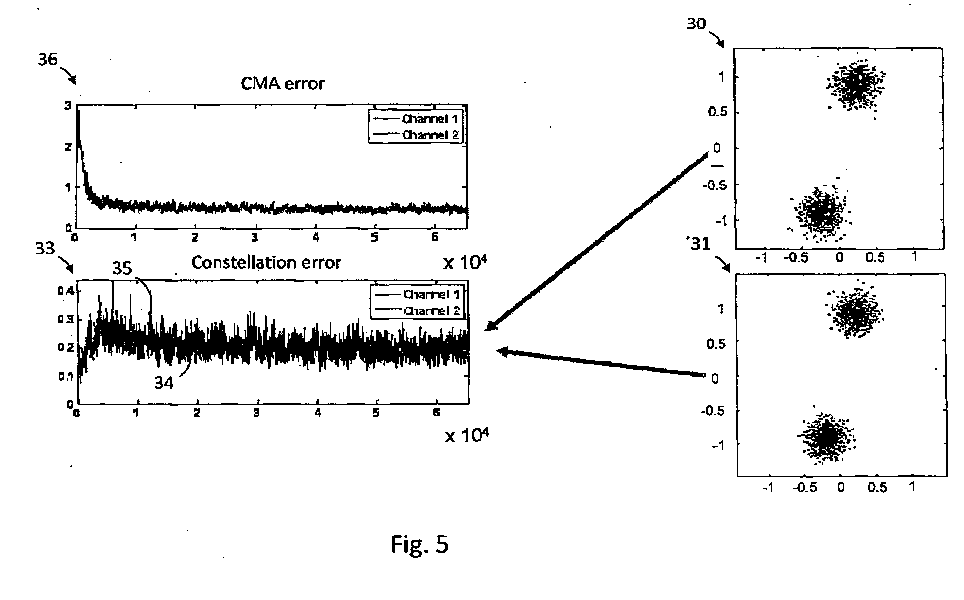

Fig. 5 presents the results using the same transmitted DP-BPSK signal when using the update algorithm given by (3) and (4), with o = 2, i = 1, and $\mu_1 = \mu_2 = 10^{-3}$. The right upper scatter plot 30 and the right lower scatter plot 31 in Fig. 5 show the recovered constellations (after convergence) of the signals $z_1$ and $z_2$ at the polarization demultiplexer output, respectively.

Here, the upper constellation of $z_1$ in diagram 20 is binary, and also the lower constellation of $z_2$ in diagram 31 is binary. In the lower left diagram 33, the magnitude 34 of the constellation error of output signal component $z_1$ and the magnitude 35 of the constellation error of output signal component $z_2$ are shown over time. Since both output signal components $z_1$, $z_2$ exhibit a binary constellation, the magnitudes 34, 35 of the constellation errors shows similarly small values.

Fig. 5 indicates that the proposed algorithm successfully minimizes the constellation error, yielding binary constellations at the filter output for both polarizations. Thus, the transmitted optical signal can be recovered without errors.

**Claims**

1. A method for adjusting a polarization demultiplexer (1-4) in an optical receiver configured to receive a dual-polarization optical signal having two BPSK modulated signal components in different polarizations, the polarization demultiplexer (1-4) outputting a first output signal component ($z_1$) and a second output signal component ($z_2$), and the method comprising the step of:

   - adjusting filter coefficients of the polarization demultiplexer (1-4) the adjusting being based on minimizing an error function associated to the first output signal component ($z_1$) and/or minimizing an error function associated to the second output signal component ($z_2$), an error function associated to an output signal component ($z_1$, $z_2$) comprising

      - a constant modulus error contribution indicating a deviation of the respective output signal component ($z_1$, $z_2$) from a circle around the root of the complex plane, and
      - a constellation error contribution indicating a deviation of the constellation of the respective output signal component ($z_1$, $z_2$) from a binary constellation.

2. The method of claim 1, wherein the constellation error contribution indicates a deviation of the constellation of the respective output signal component ($z_1$, $z_2$) from a line through the origin of the complex plane.

3. The method of claim 1, wherein the constellation error contribution indicates a deviation of a phase difference between

   - the phase of a sample of a first bit of the respective output signal component ($z_1$, $z_2$) and
   - the phase of a sample of a second bit of the respective output signal component ($z_1$, $z_2$)

   from n in case the logical value of the transmitted second bit is different to the logical value of the transmitted first bit, wherein optionally a phase offset between the samples due to a frequency offset of a local oscillator in the coherent receiver is considered.

4. The method of claim 3, wherein the constellation error contribution indicates a deviation

   - of the phase difference between the phases of the two samples minus the phase offset between the samples due to the frequency offset of the local oscillator
   - from $\pi$

   in case the logical value of the transmitted second bit is different to the logical value of the transmitted first bit.

5. The method of claim 3, wherein the first and second bits are neighboring bits.

6. The method of claim 1, wherein the constellation error contribution is based on the imaginary part of a product of

   - a sample of a first bit of the respective output signal component ($z_1$, $z_2$);
   - the conjugate complex of a sample of a second bit of the respective output signal component ($z_1$, $z_2$); and
   - optionally an offset term for compensating a phase offset between the samples due to a frequency offset of a local oscillator in the coherent receiver.

7. The method of claim 1, wherein the polarization demultiplexer (1-4) comprises four FIR filters,

   - the first FIR filter (1) configured to receive a first input signal component ($y_1$);
   - the second FIR filter (2) configured to receive a second input signal component ($y_2$),
   - the third FIR filter (3) configured to receive the first input signal component ($y_1$), and
   - the fourth FIR filter (4) configured to receive the second input signal component ($y_2$),

   wherein the output signals of the first (1) and second (2) FIR filters are combined to form the first output signal component ($z_1$) and the output signals of the third (3) and fourth (4) FIR filters are combined to form the second output signal component ($z_2$).

8. The method of claim 1, wherein a constellation error function associated to an output signal component k at a time instance n is proportional to

$$\left[\mathrm{imag}\!\left(z_k(n)z_k^*(n-o\cdot i)e^{-\mathrm{j}\varphi}\right)\right]^2 \ \mathrm{or} \ \left|\,\mathrm{imag}\!\left(z_k(n)z_k^*(n-o\cdot i)e^{-\mathrm{j}\varphi}\right)\right|,$$

$$\mathrm{with}\ \varphi = 2\pi\cdot i\cdot\Delta f_{\mathrm{LO}}\,/\,f_{\mathrm{SYMBOL}}\,,$$

where $z_k(n)$ denotes a sample of the respective output signal component ($z_1$, $z_2$) at a time n, o denotes the oversampling factor of the respective output signal component ($z_1$, $z_2$), with $0 \geq 1$, i denotes a time offset in bits, $f_{\mathrm{SYMBOL}}$ denotes the symbol rate of the output signal component, and $\Delta f_{\mathrm{LO}}$ denotes an estimated frequency offset between a laser at a transmitter and a local oscillator at the coherent receiver.

9. The method of claim 1, wherein filter parameters of the polarization demultiplexer (1-4) are updated based on a gradient descent method.

10. The method of claim 7, wherein filter parameters of the four FIR filters are updated in accordance with the following update formulas:

$$h_{11}(m) \to h_{11}(m) - \left[\mu_1\left\langle\left(|z_1(n)|^2 - 1\right)z_1(n)y_1^*(n-m)\right\rangle + \mathrm{j}\mu_2\left\langle C_1(n)y_1^*(n-m)\right\rangle\right]$$

$$h_{12}(m) \to h_{12}(m) - \left[\mu_1\left\langle\left(|z_1(n)|^2 - 1\right)z_1(n)y_2^*(n-m)\right\rangle + \mathrm{j}\mu_2\left\langle C_1(n)y_2^*(n-m)\right\rangle\right]$$

$$h_{21}(m) \to h_{21}(m) - \left[\mu_1\left\langle\left(|z_2(n)|^2 - 1\right)z_2(n)y_1^*(n-m)\right\rangle + \mathrm{j}\mu_2\left\langle C_2(n)y_1^*(n-m)\right\rangle\right]$$

$$h_{22}(m) \to h_{22}(m) - \left[\mu_1\left\langle\left(|z_2(n)|^2 - 1\right)z_2(n)y_2^*(n-m)\right\rangle + \mathrm{j}\mu_2\left\langle C_2(n)y_2^*(n-m)\right\rangle\right]$$

w
with

$$C_k = z_k(n-o\cdot i)e^{\mathrm{j}\varphi}\,\mathrm{imag}\!\left[z_k(n)z_k^*(n-o\cdot i)e^{-\mathrm{j}\varphi}\right] - z_k(n+o\cdot i)e^{-\mathrm{j}\varphi}\,\mathrm{imag}\!\left[z_k(n+o\cdot i)z_k^*(n)e^{-\mathrm{j}\varphi}\right]$$

or

$$C_k = z_k(n-o\cdot i)\,\mathrm{imag}\!\left[z_k(n)z_k^*(n-o\cdot i)e^{-\mathrm{j}\varphi}\right] - z_k(n+o\cdot i)\,\mathrm{imag}\!\left[z_k(n+o\cdot i)z_k^*(n)e^{-\mathrm{j}\varphi}\right]$$

and

$$\varphi = 2\pi \cdot i \cdot \Delta f_{\text{LO}} \, / \, f_{\text{SYMBOL}} \, ,$$

where each term$\langle ... \rangle$ denotes a mean value over P $\geq$ 1 values of the respective parenthesized term with different values for n,

$h_{11}$ denotes the filter parameters of the first FIR filter (1), $h_{12}$ denotes the filter parameters of the second FIR filter (2), $h_{21}$ denotes the filter parameters of the third FIR filter (3), $h_{22}$ denotes the filter parameters of the fourth FIR filter (4), $m = 0,1....(N-1)$ denotes the index of the filter coefficient, $\mu_1$ and $\mu_2$ denote adaptation parameters with $\mu_1 \neq 0$ and $\mu_2 \neq 0$, $o$ denotes the oversampling factor of the respective output signal component ($z_1$, $z_2$), with $0 \geq 1$, $i$ denotes a time offset in bits, $y_1$ denotes a sample of the first input signal component ($y_1$), $y_2$ denotes a sample of the second input signal component ($y_2$), $z_1$ denotes a sample of the first output signal component ($z_1$), $z_2$ denotes a sample of the second output signal component ($z_2$), $f_{\text{SYMBOL}}$ denotes the symbol rate of an output signal component, and $\Delta f_{\text{LO}}$ denotes an estimated frequency offset between a laser at a transmitter and a local oscillator at the receiver.

11. The method of claim 10, wherein the filter parameters are updated every Q samples and each therm$\langle ... \rangle$ denotes a mean value over P > 1 values of the respective function $f$ of n according to the following definition:

$$\langle f(n) \rangle := \frac{1}{P} \sum_p f(n - p) \, ,$$

with the P values of p being elements of the set $\{0,o,2o,3o,...Q\}$.

12. The method of claim 7, wherein the filter parameters of a FIR filter (1-4) are updated every Q samples of the signal at the output of the FIR filter (1-4), with Q » 1 and Q = k ·o, where o $\geq$ 1 denotes the oversampling factor and k is an integer.

13. An apparatus for adjusting a polarization demultiplexer (1-4) in an optical receiver configured to receive a dual-polarization optical signal having two BPSK modulated signal components in different polarizations, the polarization demultiplexer (1-4) configured to output a first output signal component ($z_1$) and a second output signal component ($z_2$), and the apparatus comprising:

- means for adjusting filter coefficients of the polarization demultiplexer (1-4), the means configured to adjust the polarization demultiplexer (1-4) based on minimizing an error function associated to the first output signal component ($z_1$) and/or minimizing an error function associated to the second output signal component, an error function associated to an output signal component ($z_1$, $z_2$) comprising

- a constant modulus error contribution indicating a deviation of the respective output signal component ($z_1$, $z_2$) from a circle around the root of the complex plane, and
- a constellation error contribution indicating a deviation of the constellation of the respective output signal component ($z_1$, $z_2$) from a binary constellation.

14. An optical receiver configured to receive a dual-polarization optical signal, the optical signal having two BPSK modulated signal components in different polarizations, the receiver comprising

- a polarization demultiplexer (1-4) outputting a first output signal component ($z_1$) and a second output signal component ($z_2$); and
- the apparatus for adjusting the polarization demultiplexer (1-4) according to claim 13.

15. The receiver of claim 14, wherein the receiver is a coherent receiver using coherent detection.

**Patentansprüche**

1. Verfahren zur Einstellung eines Polarisations-Demultiplexers (1-4) in einem optischen Empfänger, welcher für den Empfang eines doppelt polarisierten optischen Signals mit zwei BPSK-modulierten Signalkomponenten in unterschiedlichen Polarisationen konfiguriert ist, wobei der Polarisations-Demultiplexer (1-4) eine erste Ausgangssignalkomponente ($z_1$) und eine zweite Ausgangssignalkomponente ($z_2$) ausgibt, und wobei das Verfahren den folgenden Schritt umfasst:

- Einstellen der Filterkoeffizienten des Polarisations-Demultiplexers (1-4), wobei das Einstellen auf der Minimierung einer mit der ersten Ausgangssignalkomponente ($z_1$) assoziierten Fehlerfunktion und/oder der Minimierung einer mit der zweiten Ausgangssignalkomponente ($z_2$) assoziierten Fehlerfunktion basiert, wobei eine mit einer Ausgangssignalkomponente ($z_1$, $z_2$) assoziierte Fehlerfunktion umfasst:

- einen Konstant-Modulus-Fehlerbeitrag, welcher eine Abweichung der jeweiligen Ausgangssignalkomponente ($z_1$, $z_2$) von einem Kreis um die Wurzel der komplexen Ebene anzeigt, und
- einen Konstellationsfehlerbeitrag, welcher eine Abweichung der Konstellation der jeweiligen Ausgangssignalkomponente ($z_1$, $z_2$) von einer binären Konstellation anzeigt.

2. Verfahren nach Anspruch 1, wobei der Konstellationsfehlerbeitrag eine Abweichung der Konstellation der jeweiligen Ausgangssignalkomponente ($z_1$, $z_2$) von einer Leitung durch den Ursprung der komplexen Ebene anzeigt.

3. Verfahren nach Anspruch 1, wobei der Konstellationsbeitrag eine Abweichung einer Phasendifferenz zwischen

- der Phase eines Abtastwerts eines ersten Bits der jeweiligen Ausgangssignalkomponente ($z_1$, $z_2$) und
- der Phase eines Abtastwerts eines zweiten Bits der jeweiligen Ausgangssignalkomponente ($z_1$, $z_2$)

von $\pi$, wenn der logische Wert des übertragenen zweiten Bits ein anderer als der logische Wert des übertragenen ersten Bits ist,
wobei optional ein Phasenversatz zwischen den Abtastwerten aufgrund eines Frequenzversatzes eines lokalen Oszillators in dem kohärenten Empfänger berücksichtigt wird.

4. Verfahren nach Anspruch 3, wobei der Konstellationsfehlerbeitrag eine Abweichung

- der Phasendifferenz zwischen den Phasen der beiden Abtastwerte abzüglich des Phasenversatzes zwischen den Abtastwerten aufgrund des Frequenzversatzes des lokalen Oszillators
- von $\pi$

anzeigt, wenn der logische Wert des übertragenen zweiten Bits ein anderer als der logische Wert des übertragenen ersten Bits ist.

5. Verfahren nach Anspruch 3, wobei das erste und das zweite Bit benachbarte Bits sind.

6. Verfahren nach Anspruch 1, wobei der Konstellationsfehlerbeitrag auf dem imaginären Teil eines Produktes von

- einem Abtastwert eines ersten Bits der jeweiligen Ausgangssignalkomponente ($z_1$, $z_2$)
- einem konjugierten Komplex eines Abtastwerts eines zweiten Bits der jeweiligen Ausgangssignalkomponente ($z_1$, $z_2$); und
- optional einem Offset-Term zur Kompensierung eines Phasenversatzes zwischen den Abtastwerten aufgrund eines Frequenzversatzes eine lokalen Oszillators in dem kohärenten Empfänger

basiert.

7. Verfahren nach Anspruch 1, wobei der Polarisations-Demultiplexer (1-4) vier FIR-Filter umfasst, wobei:

- der erste FIR-Filter (1) für den Empfang einer ersten Eingangssignalkomponente ($y_1$) konfiguriert ist,
- der zweite FIR-Filter (2) für den Empfang einer zweiten Eingangssignalkomponente ($y_2$) konfiguriert ist,
- der dritte FIR-Filter (3) für den Empfang der ersten Eingangssignalkomponente ($y_1$) konfiguriert ist, und
- der vierte FIR-Filter (4) für den Empfang der zweiten Eingangssignalkomponente ($y_2$) konfiguriert ist,

wobei die Ausgangssignale des ersten (1) und des zweiten (2) FIR-Filters kombiniert werden, um die erste Ausgangssignalkomponente ($z_1$) zu bilden, und die Ausgangssignale des dritten (3) und des vierten (4) FIR-Filters kombiniert werden, um die zweite Ausgangssignalkomponente ($z_2$) zu bilden,

8. Verfahren nach Anspruch 1, wobei eine mit einer Ausgangssignalkomponente k assoziierte Konstellationsfehlerfunktion zu einem Zeitpunkt n proportional zu

$$\left[\mathrm{imag}\!\left(z_k(n)z_k^*(n-o\cdot i)e^{-j\varphi}\right)\right]^2 \text{ or } \left|\mathrm{imag}\!\left(z_k(n)z_k^*(n-o\cdot i)e^{-j\varphi}\right)\right|$$

ist,
mit

$$\varphi = 2\pi \cdot i \cdot \Delta f_{\mathrm{LO}} / f_{\mathrm{SYMBOL}} \, ,$$

wobei $z_k(n)$ einen Abtastwert der jeweiligen Ausgangssignalkomponente $(z_1, z_2)$ zu einem Zeitpunkt $n$ kennzeichnet, $o$ den Überabtastfaktor der jeweiligen Ausgangssignalkomponente $(z_1, z_2)$ kennzeichnet, mit $0 \geq 1$, $i$ einen Zeitversatz in Bits kennzeichnet, $f_{\mathrm{SYMBOL}}$ die Symbolrate der Ausgangssignalkomponente kennzeichnet, und $\Delta f_{\mathrm{LO}}$ einen geschätzten Frequenzversatz zwischen einem Laser an einem Sender und einem lokalen Oszillator an dem kohärenten Empfänger kennzeichnet.

9. Verfahren nach Anspruch 1, wobei die Filterparameter des Polarisations-Demultiplexers (1-4) auf Basis eines Gradientabfall-Verfahrens aktualisiert werden.

10. Verfahren nach Anspruch 7, wobei die Filterparameter der vier FIR-Filter gemäß den folgenden Aktualisierungsformeln aktualisiert werden:

$$h_{11}(m) \rightarrow h_{11}(m) - \left[\mu_1 \left\langle \left(|z_1(n)|^2 - 1\right)z_1(n)y_1^*(n-m)\right\rangle + j\mu_2 \left\langle C_1(n)y_1^*(n-m)\right\rangle\right]$$

$$h_{12}(m) \rightarrow h_{12}(m) - \left[\mu_1 \left\langle \left(|z_1(n)|^2 - 1\right)z_1(n)y_2^*(n-m)\right\rangle + j\mu_2 \left\langle C_1(n)y_2^*(n-m)\right\rangle\right]$$

$$h_{21}(m) \rightarrow h_{21}(m) - \left[\mu_1 \left\langle \left(|z_2(n)|^2 - 1\right)z_2(n)y_1^*(n-m)\right\rangle + j\mu_2 \left\langle C_2(n)y_1^*(n-m)\right\rangle\right]$$

$$h_{22}(m) \rightarrow h_{22}(m) - \left[\mu_1 \left\langle \left(|z_2(n)|^2 - 1\right)z_2(n)y_2^*(n-m)\right\rangle + j\mu_2 \left\langle C_2(n)y_2^*(n-m)\right\rangle\right]$$

w
mit

$$C_k = z_k(n-o\cdot i)e^{j\varphi}\,\mathrm{imag}\!\left[z_k(n)z_k^*(n-o\cdot i)e^{-j\varphi}\right] - z_k(n+o\cdot i)e^{-j\varphi}\,\mathrm{imag}\!\left[z_k(n+o\cdot i)z_k^*(n)e^{-j\varphi}\right]$$

oder

$$C_k = z_k(n-o\cdot i)\,\mathrm{imag}\!\left[z_k(n)z_k^*(n-o\cdot i)e^{-j\varphi}\right] - z_k(n+o\cdot i)\,\mathrm{imag}\!\left[z_k(n+o\cdot i)z_k^*(n)e^{-j\varphi}\right]$$

und

$$\varphi = 2\pi \cdot i \cdot \Delta f_{\text{LO}} / f_{\text{SYMBOL}},$$

wobei jeder Term $\langle...\rangle$ einen mittleren Wert über $P \geq 1$ Werte des jeweiligen eingeklammerten Terms mit verschiedenen Werten für $n$ kennzeichnet,

$h_{11}$ die Filterparameter des ersten FIR-Filters (1) kennzeichnet, $h_{12}$ die Filterparameter des zweiten FIR-Filters (2) kennzeichnet, $h_{21}$ die Filterparameter des dritten FIR-Filters (3) kennzeichnet, $h_{22}$ die Filterparameter des zweiten FIR-Filters (4) kennzeichnet, $m = 0,1,...(N-1)$ den Index des Filterkoeffizienten kennzeichnet, $\mu_1 \neq 0$ und $\mu_2 \neq 0$, $o$ den Überabtastfaktor der jeweiligen Ausgangssignalkomponente $(z_1, z_2)$, mit $o \geq 1$, kennzeichnet, $i$ einen Zeitversatz in Bits kennzeichnet, $y_1$ einen Abtastwert der ersten Eingangssignalkomponente $(y_1)$ kennzeichnet, $y_2$ einen Abtastwert der zweiten Eingangssignalkomponente $(y_2)$ kennzeichnet, $z_1$ einen Abtastwert der ersten Ausgangssignalkomponente $(z_1)$ kennzeichnet, $z_2$ einen Abtastwert der zweiten Ausgangssignalkomponente $(z_2)$ kennzeichnet, $f_{\text{SYMBOL}}$ die Symbolrate einer Ausgangssignalkomponente kennzeichnet, und $\Delta f_{\text{LO}}$ einen geschätzten Frequenzversatz zwischen einem Laser an einem Sender und einem lokalen Oszillator an dem kohärenten Empfänger kennzeichnet.

**11.** Verfahren nach Anspruch 10, wobei die Filterparameter alle Q Abtastwerte aktualisiert werden und jeder Term $\langle...\rangle$ einen mittleren Wert über $P > 1$ Werte der jeweiligen Funktion $f$ von n gemäß der folgenden Definition kennzeichnet:

$$\langle f(n) \rangle := \frac{1}{P} \sum_p f(n-p),$$

wobei die P Werte von p Elemente des Satzes $\{0, o, 2o, 3o, ... Q\}$ sind.

**12.** Verfahren nach Anspruch 7, wobei die Filterparameter eines FIR-Filters (1-4) alle Q Abtastwerte des Signals am Ausgang des FIR-Filters (1-4) aktualisiert werden, mit Q » 1 und Q = k ·o, wobei o $\geq$ 1 den Überabtastwert kennzeichnet und k eine ganze Zahl ist.

**13.** Vorrichtung zur Einstellung eines Polarisations-Demultiplexers (1-4) in einem optischen Empfänger, welcher für den Empfang eines doppelt polarisierten optischen Signals mit zwei BPSK-modulierten Signalkomponenten in unterschiedlichen Polarisationen konfiguriert ist, wobei der Polarisations-Demultiplexer (1-4) für die Ausgabe einer ersten Ausgangssignalkomponente $(z_1)$ und einer zweiten Ausgangssignalkomponente $(z_2)$ konfiguriert ist, und wobei die Vorrichtung umfasst:

- Mittel zum Einstellen der Filterkoeffizienten des Polarisations-Demultiplexers (1-4), wobei die Mittel dafür konfiguriert sind, den Polarisations-Demultiplexer (1-4) auf Basis der Minimierung einer mit der ersten Ausgangssignalkomponente $(z_1)$ assoziierten Fehlerfunktion und/oder der Minimierung einer mit der zweiten Ausgangssignalkomponente assoziierten Fehlerfunktion einzustellen, wobei eine mit einer Ausgangssignalkomponente $(z_1, z_2)$ assoziierte Fehlerfunktion umfasst:

- einen Konstant-Modulus-Fehlerbeitrag, welcher eine Abweichung der jeweiligen Ausgangssignalkomponente $(z_1, z_2)$ von einem Kreis um die Wurzel der komplexen Ebene anzeigt, und
- einen Konstellationsfehlerbeitrag, welcher eine Abweichung der Konstellation der jeweiligen Ausgangssignalkomponente $(z_1, z_2)$ von einer binären Konstellation anzeigt.

**14.** Optischer Empfänger, konfiguriert für den Empfang eines doppelt polarisierten optischen Signals, wobei das optische Signal zwei BPSK-modulierte Signalkomponenten in unterschiedlichen Polarisationen aufweist, wobei der Empfänger umfasst:

- Einen Polarisations-Demultiplexer (1-4), welcher eine erste Ausgangssignalkomponente $(z_1)$ und eine zweite Ausgangssignalkomponente $(z_2)$ ausgibt, und
- die Vorrichtung zur Einstellung des Polarisations-Demultiplexers (1-4) gemäß Anspruch 13.

**15.** Empfänger nach Anspruch 14, wobei der Empfänger ein kohärenter Empfänger mit Kohärenzerkennung ist.

**Revendications**

**1.** Procédé pour régler un démultiplexeur de polarisation (1 à 4) dans un récepteur optique configuré pour recevoir un signal optique à double polarisation présentant deux composantes de signal de modulation par déplacement de phase binaire (MDPB) dans des polarisations différentes, le démultiplexeur de polarisation (1 à 4) délivrant en sortie une première composante du signal de sortie ($z_1$) et une deuxième composante du signal de sortie ($z_2$), et le procédé comprend l'étape suivante :

- régler des coefficients de filtre du démultiplexeur de polarisation (1 à 4), le réglage étant basé sur la réduction au minimum d'une fonction d'erreur associée à la première composante du signal de sortie ($z_1$) et/ou sur la réduction au minimum d'une fonction d'erreur associée à la deuxième composante du signal de sortie ($z_2$), une fonction d'erreur associée à une composante du signal de sortie ($z_1$, $z_2$) comprenant
- une contribution d'erreur à module constant indiquant un écart de la composante du signal de sortie respective ($z_1$, $z_2$) par rapport à un cercle autour de la racine du plan complexe, et
- une contribution d'erreur de constellation indiquant un écart de la constellation de la composante du signal de sortie respective ($z_1$, $z_2$) par rapport à une constellation binaire.

**2.** Procédé selon la revendication 1, dans lequel la contribution d'erreur de constellation indique un écart de la constellation de la composante du signal de sortie respective ($z_1$, $z_2$) par rapport à une ligne passant par l'origine du plan complexe.

**3.** Procédé selon la revendication 1, dans lequel la contribution d'erreur de constellation indique un écart d'une différence de phase entre

- la phase d'un échantillon d'un premier bit de la composante du signal de sortie respective ($z_1$, $z_2$) et
- la phase d'un échantillon d'un deuxième bit de la composante du signal de sortie respective ($z_1$, $z_2$)

par rapport à $\pi$ au cas où la valeur logique du deuxième bit transmis est différente de la valeur logique du premier bit transmis,
dans lequel on considère, facultativement, un décalage de phase entre les échantillons dû à un décalage de fréquence d'un oscillateur local dans le récepteur cohérent.

**4.** Procédé selon la revendication 3, dans lequel la contribution d'erreur de constellation indique un écart

- de la différence de phase entre les phases des deux échantillons moins le décalage de phase entre les échantillons dû au décalage de fréquence de l'oscillateur local
- par rapport à $\pi$

au cas où la valeur logique du deuxième bit transmis est différente de la valeur logique du premier bit transmis.

**5.** Procédé selon la revendication 3, dans lequel les premier et deuxième bits sont des bits voisins.

**6.** Procédé selon la revendication 1, dans lequel la contribution d'erreur de constellation est basée sur la partie imaginaire d'un produit

- d'un échantillon d'un premier bit de la composante du signal de sortie respective ($z_1$, $z_2$) ;
- du complexe conjugué d'un échantillon d'un deuxième bit de la composante du signal de sortie respective ($z_1$, $z_2$) ; et
- facultativement, d'un terme de décalage pour compenser un décalage de phase entre les échantillons dû à un décalage de fréquence d'un oscillateur local dans le récepteur cohérent.

**7.** Procédé selon la revendication 1, dans lequel le démultiplexeur de polarisation (1 à 4) comprend quatre filtres RIF,

- le premier filtre RIF (1) étant configuré pour recevoir une première composante du signal d'entrée ($y_1$),
- le deuxième filtre RIF (2) étant configuré pour recevoir une deuxième composante du signal d'entrée ($y_2$),

- le troisième filtre RIF (3) étant configuré pour recevoir la première composante du signal d'entrée ($y_1$), et
- le quatrième filtre RIF (4) étant configuré pour recevoir la deuxième composante du signal d'entrée ($y_2$),

dans lequel les signaux de sortie des premier (1) et deuxième (2) filtres RIF sont combinés pour former la première composante du signal de sortie ($z_1$) et les signaux de sortie des troisième (3) et quatrième (4) filtres RIF sont combinés pour former la deuxième composante du signal de sortie ($Z_2$).

8. Procédé selon la revendication 1, dans lequel une fonction d'erreur de constellation associée à une composante du signal de sortie $k$ à un moment $n$ est proportionnelle à

$$\left[\mathrm{imag}\!\left(z_k(n)z_k^*(n-o\cdot i)e^{-j\varphi}\right)\right]^2 \quad \text{ou} \quad \left|\mathrm{imag}\!\left(z_k(n)z_k^*(n-o\cdot i)e^{-j\varphi}\right)\right|,$$

avec

$$\varphi = 2\pi\cdot i\cdot \Delta f_{\mathrm{LO}} / f_{\mathrm{SYMBOL}},$$

où $z_k(n)$ désigne un échantillon de la composante du signal de sortie respective ($z_1$, $z_2$) à un moment n, o désigne le facteur de suréchantillonnage de la composante du signal de sortie respective ($z_1$, $z_2$), avec $o \geq 1$, $i$ désigne un décalage de temps en bits, $f_{\mathrm{SYMBOL}}$ désigne le débit de symboles de la composante du signal de sortie, et $\Delta f_{\mathrm{LO}}$ désigne un décalage de fréquence estimé entre un laser au niveau d'un émetteur et un oscillateur local au niveau du récepteur cohérent.

9. Procédé selon la revendication 1, dans lequel des paramètres de filtre du démultiplexeur de polarisation (1 à 4) sont mis à jour sur la base d'une méthode de descente de gradient.

10. Procédé selon la revendication 7, dans lequel des paramètres de filtre des quatre filtres RIF sont mis à jour conformément aux formules de mise à jour suivantes :

$$h_{11}(m) \to h_{11}(m) - \left[\mu_1\left\langle\left(|z_1(n)|^2 - 1\right)z_1(n)y_1^*(n-m)\right\rangle + j\mu_2\left\langle C_1(n)y_1^*(n-m)\right\rangle\right]$$

$$h_{12}(m) \to h_{12}(m) - \left[\mu_1\left\langle\left(|z_1(n)|^2 - 1\right)z_1(n)y_2^*(n-m)\right\rangle + j\mu_2\left\langle C_1(n)y_2^*(n-m)\right\rangle\right]$$

$$h_{21}(m) \to h_{21}(m) - \left[\mu_1\left\langle\left(|z_2(n)|^2 - 1\right)z_2(n)y_1^*(n-m)\right\rangle + j\mu_2\left\langle C_2(n)y_1^*(n-m)\right\rangle\right]$$

$$h_{22}(m) \to h_{22}(m) - \left[\mu_1\left\langle\left(|z_2(n)|^2 - 1\right)z_2(n)y_2^*(n-m)\right\rangle + j\mu_2\left\langle C_2(n)y_2^*(n-m)\right\rangle\right]$$

w
avec

$$C_k = z_k(n - o \cdot i)e^{j\varphi}\, \mathrm{imag}\big[z_k(n)z_k^*(n - o \cdot i)e^{-j\varphi}\big] - z_k(n + o \cdot i)e^{-j\varphi}\, \mathrm{imag}\big[z_k(n + o \cdot i)z_k^*(n)e^{-j\varphi}\big]$$

ou

$$C_k = z_k(n - o \cdot i)\, \mathrm{imag}\big[z_k(n)z_k^*(n - o \cdot i)e^{-j\varphi}\big] - z_k(n + o \cdot i)\, \mathrm{imag}\big[z_k(n + o \cdot i)z_k^*(n)e^{-j\varphi}\big]$$

et

$$\varphi = 2\pi \cdot i \cdot \Delta f_{\mathrm{LO}} / f_{\mathrm{SYMBOL}},$$

où chaque terme (...) désigne une valeur moyenne par rapport aux valeurs $P \geq 1$ du terme entre parenthèses respectif avec des valeurs différentes pour n,

$h_{11}$ désigne les paramètres de filtre du premier filtre RIF (1), $h_{12}$ désigne les paramètres de filtre du deuxième filtre RIF (2), $h_{21}$ désigne les paramètres de filtre du troisième filtre RIF (3), $h_{22}$ désigne les paramètres de filtre du quatrième filtre RIF (4), $m = 0,1,...(N-1)$ désigne l'index du coefficient de filtre, $\mu_1$ et $\mu_2$ désignent des paramètres d'adaptation avec $\mu 1 \neq 0$ et $\mu 2 \neq 0$, $o$ désigne le facteur de suréchantillonnage de la composante du signal de sortie respective ($z_1$, $z_2$), $o \geq 1$, $i$ désigne un décalage de temps en bits, $y_1$ désigne un échantillon de la première composante du signal d'entrée ($y_1$), $y_2$ désigne un échantillon de la deuxième composante du signal d'entrée ($y_2$), $z_1$ désigne un échantillon de la première composante du signal de sortie ($z_1$), $z_2$ désigne un échantillon de la deuxième composante du signal de sortie ($Z_2$), $f_{\mathrm{SYMBOL}}$ désigne le débit de symboles d'une composante du signal de sortie, et $\Delta f_{\mathrm{LO}}$ désigne un décalage de fréquence estimé entre un laser au niveau d'un émetteur et un oscillateur local au niveau du récepteur.

11. Procédé selon la revendication 10, dans lequel les paramètres de filtre sont mis à jour tous les Q échantillons et chaque terme (...) désigne une valeur moyenne par rapport aux valeurs $P > 1$ de la fonction respective f de n conformément à la définition suivante :

$$\langle f(n) \rangle := \frac{1}{P}\sum_p f(n - p),$$

les valeurs P de p étant des éléments de l'ensemble $\{0,o,2o,3o,...Q\}$.

12. Procédé selon la revendication 7, dans lequel les paramètres de filtre d'un filtre RIF (1 à 4) sont mis à jour tous les Q échantillons du signal au niveau de la sortie du filtre RIF (1 à 4), avec Q » 1 et Q = k o, où $o \geq 1$ désigne le facteur de suréchantillonnage et k est un nombre entier.

13. Appareil pour régler un démultiplexeur de polarisation (1 à 4) dans un récepteur optique configuré pour recevoir un signal optique à double polarisation présentant deux composantes de signal de modulation par déplacement de phase binaire (MDPB) dans des polarisations différentes, le démultiplexeur de polarisation (1 à 4) étant configuré pour délivrer en sortie une première composante du signal de sortie ($z_1$) et une deuxième composante du signal de sortie ($z_2$), et l'appareil comprenant :

- moyens pour régler des coefficients de filtre du démultiplexeur de polarisation (1 à 4), les moyens étant configurés pour régler le démultiplexeur de polarisation (1 à 4) sur la base de la réduction au minimum d'une fonction d'erreur associée à la première composante du signal de sortie ($z_1$) et/ou de la réduction au minimum d'une fonction d'erreur associée à la deuxième composante du signal de sortie, une fonction d'erreur associée à une composante du signal de sortie ($z_1$, $z_2$) comprenant
- une contribution d'erreur à module constant indiquant un écart de la composante du signal de sortie respective

($z_1$, $z_2$) par rapport à un cercle autour de la racine du plan complexe, et

- une contribution d'erreur de constellation indiquant un écart de la constellation de la composante du signal de sortie respective ($z_1$, $z_2$) par rapport à une constellation binaire.

14. Récepteur optique configuré pour recevoir un signal optique à double polarisation, le signal optique présentant deux composantes de signal de modulation par déplacement de phase binaire (MDPB) dans des polarisations différentes, le récepteur comprenant

- un démultiplexeur de polarisation (1 à 4) délivrant en sortie une première composante du signal de sortie ($z_1$) et une deuxième composante du signal de sortie ($z_2$) ; et
- l'appareil pour régler le démultiplexeur de polarisation (1 à 4) conformément à la revendication 13.

15. Récepteur selon la revendication 14, le récepteur étant un récepteur cohérent utilisant une détection cohérente.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 08290902 A
- US 5793511 A
- EP 2051414 A
- WO 0235743 A

### Non-patent literature cited in the description

- **C. RICHARD JOHNSON et al.** Blind Equalization Using the Constant Modulus Criterion: A Review. *Proceedings of the IEEE,* October 1998, vol. 86 (10
- **SEB J. SAVORY.** Digital filters for coherent optical receivers. *Optical Express,* January 2008, vol. 16 (2
- **J. R. TREICHLER et al.** New Processing Techniques Based on the Constant Modulus Adaptive Algorithm. *IEEE Transactions on Acoustics, Speech and Signal Processing,* April 1985, vol. ASSP-33 (2
- **G. CHARLET et al.** Transmission of 81 channels at 40Gbit/s over a Transpacific-Distance Erbium-only Link, using PDM-BPSK Modulation, Coherent Detection, and a new large effective area fibre. *Proc. ECOC,* 2008
- **AND-REW J. VITERBI et al.** Nonlinear Estimation of PSK-Modulated Carrier Phase with Application to Burst Digital Transmission. *IEEE Transactions on Information Theory,* July 1983, vol. IT-29 (4